Europäisches Patentamt

European Patent Office

Office européen des brevets

(19)

(11) **EP 1 422 892 A1**

(12) **EUROPEAN PATENT APPLICATION**
published in accordance with Art. 158(3) EPC

(43) Date of publication:
26.05.2004 Bulletin 2004/22

(51) Int Cl.7: **H04L 12/66**, H04L 12/56,
H04L 29/08, H04L 1/00

(21) Application number: 02760680.5

(22) Date of filing: 20.08.2002

(86) International application number:
PCT/JP2002/008392

(87) International publication number:
WO 2003/021899 (13.03.2003 Gazette 2003/11)

(84) Designated Contracting States:
AT BE BG CH CY CZ DE DK EE ES FI FR GB GR
IE IT LI LU MC NL PT SE SK TR
Designated Extension States:
AL LT LV MK RO SI

(30) Priority: 29.08.2001 JP 2001258884
26.02.2002 JP 2002048997

(71) Applicant: MATSUSHITA ELECTRIC INDUSTRIAL
CO., LTD.
Kadoma-shi, Osaka 571-8501 (JP)

(72) Inventors:
• ITOH, Tomoaki
Kawasaki-shi, Kanagawa 214-0036 (JP)

• YAMAGUCHI, Takao
Machida-shi, Tokyo 194-0041 (JP)
• ARAKAWA, Hiroshi
Kyoto-shi, Kyoto 612-8136 (JP)
• MATSUI, Yoshinori
Ikoma-shi, Nara 630-0212 (JP)
• NOTOYA, Yoji
Neyagawa-shi, Osaka 572-0055 (JP)
• TOMA, Tadamasa
Toyonaka-shi, Osaka 560-0085 (JP)

(74) Representative: Grünecker, Kinkeldey,
Stockmair & Schwanhäusser Anwaltssozietät
Maximilianstrasse 58
80538 München (DE)

(54) **DATA TRANSMISSION&sol;RECEPTION METHOD**

(57) On the basis of a state of data transmission and/or data reception in all of or one of intermediate nodes (102, 103) provided on a transport path between a transmission terminal (101) and a reception terminal (104), data to be received by the reception terminal (104) is determined. It is therefore possible to realize audio transport without disconnection and video transport without distortion even under an environment in which a wire section and a wireless section are integrally present.

FIG. 2

**Description**

**TECHNICAL FIELD**

The present invention relates to a data transmission/reception method used in a network having a wireless section.

**BACKGROUND ART**

Conventionally, multicast transport is known as a technique of implementing simultaneous distribution of video and audio on the Internet or an intranet. The multicast transport is not a scheme in that a conventional transmission terminal and reception terminal performs one-to-one communication, but a scheme in that data transmitted from a transmission terminal is copied at a router, which is a relay node, for the number of reception terminals, and the copied data are then transmitted from the router to the plurality of reception terminals. Since the data are thus simultaneously distributed to the plurality of reception terminals, the transmission terminal itself need not form copies of the data, and need not perform transmission thereof. Consequently, using the multicast transport technique enables reduction of loads of a transport band and the transmission terminal.

In the multicast transport, quality control is used as a technique of implementing audio transport without disconnection and video transport without distortion. Examples of an element technique for performing the quality control include: (1) a scheme in which a transmission terminal side controls the transmission rate in accordance with a congestion state; (2) a scheme in which a reception terminal side selectively receives a hierarchically encoded AV (Audio Visual) stream standardized according to, for example, MPEG (Moving Picture Coding Experts Group) standards or data encoded at different encoding rates, and performs reproduction of the data in accordance with a congestion state; and (3) a scheme for restoring a lost packet, such as a FEC (Forward Error Correction) scheme and a retransmission scheme.

According to the scheme (1), a bottleneck link which is present in the network causes packet losses and delays. In addition, a usable band of a transport path constituting the network significantly varies depending on situations. Consequently, a transmission terminal receives values of a packet loss rate, a delay time and the like as feedback information from a reception terminal and controls a transmission rate, thereby controlling the packet loss rate, the delay time and the like to be within a predetermined threshold value. However, there is a possibility in that the transmission rate is disadvantageously suppressed to be a transport band of the narrowest network.

According to the scheme (2), a reception terminal detects a congestion state. For example, at the time of congestion, a router imparts an ECN (Early Congestion Notification) to an IP (Internet Protocol) packet, thereby notifying the reception terminal of the congestion. The reception terminal, which has received the IP packet with the ECN, sequentially stops reception from a video with low priority (for example, a video including many high-frequency components is set to have priority in low and that including many low-frequency components is set to have priority in high) among hierarchically encoded videos (which is constituted from video data including a plurality of frequency components) until the congestion state is suppressed. Alternatively, data encoded at a plurality of different encoding rates are stored in a transmission terminal. Then, according to detection of congestion, the reception terminal selectively receives data encoded at an encoding rate lower than a current rate.

Japanese Unexamined Patent Publication No. 2001-045098 discloses a scheme similar to the above. According to this scheme, a transmission side employs hierarchical encoding, and each reception terminal uses FEC data if necessary so that each reception terminal under the multicast environment can select a reception rate and an error resistivity that are suitable to the reception environment. Each reception terminal monitors the transmission/ reception state such as the packet loss rate, transmission rate and reception rate. The reception terminal calculates a ratio of the reception rate to the transmission rate, that is, the ratio of reception/transmission rates; and it then determines necessities of a hierarchy of data to be received and the reception of FEC in accordance with the packet loss rate and the ratio of reception/transmission rates.

(3) As the method of restoring a missing video, there is proposed a scheme (retransmission) in which a lost packet is detected by a reception terminal, and a request therefor is issued to a transmission terminal, and a scheme (forward error correction) in which transmission data and redundant data are preliminarily transmitted, and packet loss data is restored from the redundant data when a packet loss has occurred. Another one is a scheme (local recovery) in which, to prevent a loss from being influencing a network overall, a relay device such as a router is used to locally perform retransmission, forward error correction or the like in the network in which the loss has occurred.

Problems to be solved by the present invention are broadly categorized into two.

(Problem 1) Congestion control in network having wireless section

As described above, in the multicast technique, the ECN can be used to notify the reception terminal of a congestion state. However, the scheme uses binary values representing whether or not congestion has occurred, and hence the degree of congestion cannot be represented in the ECN. Therefore, it is not easy for the reception terminal side to select data to be received. In addition, in a network having the wire section and the wireless section, the transport quality is mainly degraded due to congestion in the wire section, and the transport quality is mainly degraded due to transport errors in the wireless section. In the configuration of such a network, when performing congestion control by using a packet loss rate, a reception terminal is not able to determine whether a packet loss has occurred due to congestion or transport errors. In addition, conventionally, a scheme has been employed in which a round trip time (RTT) of communication between a transmission terminal and a reception terminal is measured, and congestion is detected in accordance with a variation in the RTT. In this scheme, however, a transport delay between a wireless gateway and the reception terminal can occur for a reason other than congestion (because of hand-over, for example), therefore making it difficult to accurately determine congestion in a network having a wireless section.

(Problem 2) Error correction process in network having wire section and wireless section

As described above, in the network having the wire section and the wireless section, the transport quality is mainly degraded due to congestion in the wire section, and the transport quality is mainly degraded due to transport errors in the wireless section. However, when performing congestion control by using the packet loss rate, the reception terminal is not able to determine whether a packet loss has occurred due to congestion or a transport error. For this reason, redundant data cannot be received at the reception terminal or data which is subjected to an error resistivity process cannot appropriately selected in accordance with the degree of transport error occurring in the wireless section.
Although the scheme disclosed in Japanese Unexamined Patent Publication No. 2001-045098 is devised to solve the problems 1 and 2, the scheme has the following two problems. First, according to the scheme, since each reception terminal monitors the reception rate, it needs to know the packet length of even in a packet that has occurred a transport error. However, since also an error might have occurred at a field indicating the packet length, an accurate reception rate cannot be obtained. Further, the number of packet losses actually occurred in the wireless section cannot be known from the ratio of reception/transmission rates. This makes it difficult to determine the degree of error resistivity (i.e., to determine a threshold of the ratio of reception/transmission rates).

**DISCLOSURE OF THE INVENTION**

An object of the present invention is to solve the above-described problems 1 and 2, thereby realizing audio transport without disconnection and video transport without distortion even on a network having a wireless section.
In order to achieve the object, a first aspect of the present invention is premised on a data transmission/reception method of transmitting/receiving a data packet between a transmission terminal and a reception terminal in a transport path having a wire section and a wireless section via a gateway which is present in a boundary between the both sections, wherein the reception terminal or an intermediate node determines data to be received by the reception terminal on the basis of a state of data reception and/or data transmission of data in the intermediate node including the gateway provided on the transport path.
It is sufficient that the data to be received is determined on the basis of at least one of a round trip time between the transmission terminal and the intermediate node, jitter of the round trip time, a packet loss rate at the intermediate node, and a link band of the intermediate node. In addition, it is sufficient that at least one of hierarchically encoded data, data subjected to a error resistivity process and redundant data is determined as the data to be received on the basis of information of packet loss obtained in the intermediate node and information of packet loss obtained in the reception terminal.
On the other hand, a second aspect of the present invention is premised on a data transmission/reception method of transmitting/receiving a data packet between a transmission terminal and a reception terminal via an intermediate node in a transport path having a wireless section, wherein the intermediate node determines an error resistivity strength of data to be transferred on the basis of information regarding a transport error in the wireless section. In addition, the intermediate node may determine the data to be transferred on the basis of information regarding a congestion state of the transport path in accordance with given priority.

**BRIEF DESCRIPTION OF THE DRAWINGS**

FIG. **1** shows a network which is directed by the present invention.

FIG. **2** is a configuration diagram showing a transmission terminal, intermediate nodes and a reception terminal.

FIGS. **3A**, **3B** and **3C** show encoded data formed in a video encoder or an audio encoder.

FIG. **4** shows a method of a measuring round trip time and jitter thereof.

FIG. **5** shows a method of performing congestion control on the basis of a round trip time.

FIG. **6** shows a method of measuring a packet loss rate and transport error rate resulted from congestion.

FIG. **7** shows a method of performing error resistivity control on the basis of a transport error rate.

FIG. **8** shows a method of measuring a usable band in a wireless gateway and performing congestion control.

FIG. **9** is a configuration diagram of a wireless gateway for selectively transferring multicast-transported data.

FIG. **10** shows a method of performing transport control in a wireless gateway.

FIG. **11** is a schematic diagram of a multicast system adapting the present invention.

**BEST MODE FOR CARRYING OUT THE INVENTION**

Hereinafter, description will be given of an embodiment of the present invention with reference to the drawings.

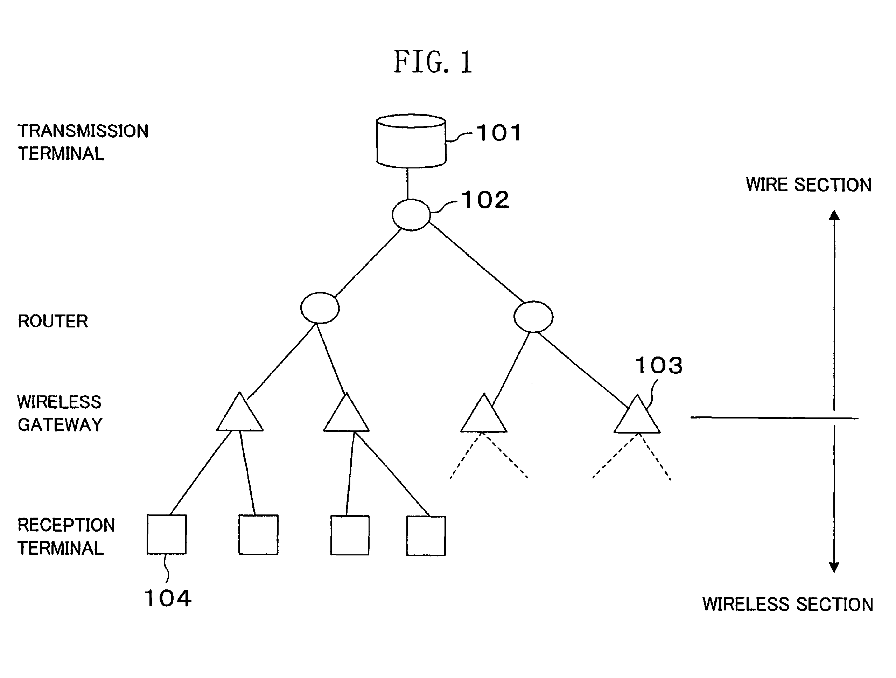

FIG. **1** shows a network which is directed by the present invention. Referring to FIG. **1**, a transmission terminal **101** transmits an encoded, stored AV stream or a real-time encoded AV stream to reception terminals **104**. Routers **102** and wireless gateways **103** are each an intermediate node. The network connecting the transmission terminal **101** to the reception terminals **104** is constituted by a wire section and a wireless section. The nodes in the wire section are interconnected through the router **102**, and the wire section and the wireless section are interconnected through the wireless gateway **103** (which may be alternatively constituted by general purpose routers). Examples of the wire section include an ISDN (Integrated Services Digital Network), an ATM (Asynchronous Transfer Mode), an FTTH (Fiber To The Home) and the like. Examples of the wireless section include a W-CDMA (Wideband Code Division Multiple Access), a wireless LAN (Local Area Network) and the like.

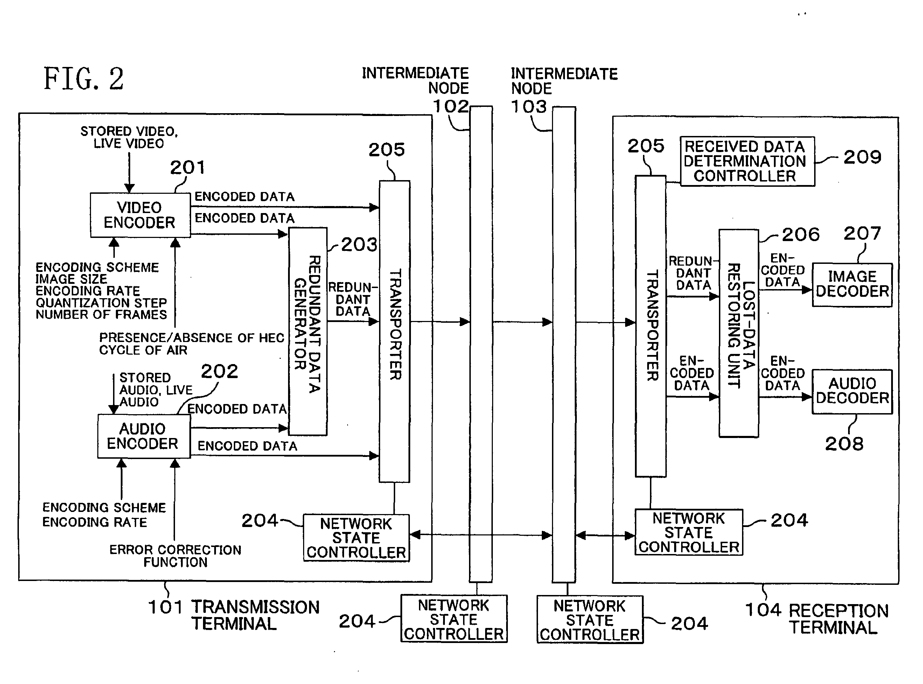

FIG. **2** is a configuration diagram of the transmission terminal **101,** the intermediate nodes **102** and **103**, and the reception terminal **104**. Referring to FIG. **2**, the transmission terminal **101** includes: a video encoder **201** that performs video encoding; an audio encoder **202** that performs audio encoding; a redundant data generator **203** that generates redundant data to enable a lost packet to be restored on the basis of encoded data; a network state controller **204** that controls the network state; and a transporter **205** that transports redundant data, encoded data, network state and the like.

The video encoder **201** and the audio encoder **202** may employ a hierarchical encoding scheme standardized by, for example, MPEG-2 or -4, or a non-standardized hierarchical encoding scheme. Alternatively, the video encoder **201** may not be provided, identical contents may be preliminarily encoded at different encoding rates and stored, and the data may be transmitted as encoded data.

Examples of image quality determination parameters to be specified for the video encoder **201** include encoding schemes with, for example, H.263 or MPEG-1, -2 or -4, image sizes with, for example, CIF (Common Intermediate Format) or QCIF (Quarter CIF), encoding rates, quantization steps and the number of frames. In addition, when performing the hierarchical encoding, the number of layers to be constituted is specified. Further, an instruction is given when error correction information are imparted to encoded data itself. In the case of the MPEG-4 standards, for example, the presence or absence of HEC (Header Extension Code), which is a function of protecting a video header, is determined; and the presence or absence and the frequency of AIR (Adaptive Intra Refresh) serving as an update function for intra-macroblock images, are determined.

Examples of parameters to be specified for the audio encoder **202** include encoding schemes, such as AMR (Audio/Modem Riser), G.711, or MPEG, and encoding rates. In addition, as in the case of image encoding, an instruction is given when imparting error correction information to encoded data itself.

In accordance with the encoded data, the redundant data generator **203** generates redundant data having predetermined correctability. As a generation scheme for redundant data, a scheme for executing an XOR (exclusive OR) process between continuous packets. Alternatively, Reed-Solomon codes, Turbo codes or the like may be used.

The network state controller **204** provides means for measuring RTTs between the transmission terminal **101** and the individual intermediate nodes **102** and **103,** jitter thereof, packet losses at the intermediate nodes **102** and **103,** and link bands of the intermediate nodes 102 and 103. Individual measuring schemes will be described below. The measuring is periodically performed during AV data transfer at, for example, five-second intervals.

The reception terminal **104** is constituted such that the transporter **205** receives encoded data and redundant data transmitted from the transmission terminal **101**. Concurrently, in a case where redundant data exists and a packet loss occurs, the reception terminal **104** includes: a lost-data restoring unit **206** that restores a lost packet in accordance with the redundant data; a video decoder **207** and an audio decoder **208** that decode video encoded data and audio encoded data, respectively; the network state controller **204;** and a reception data determination controller **209** that determines data to be received (a method therefor will be described below). A number of the reception terminals **104** exist, and the intermediate nodes **102** and **103** each have a multicast function.

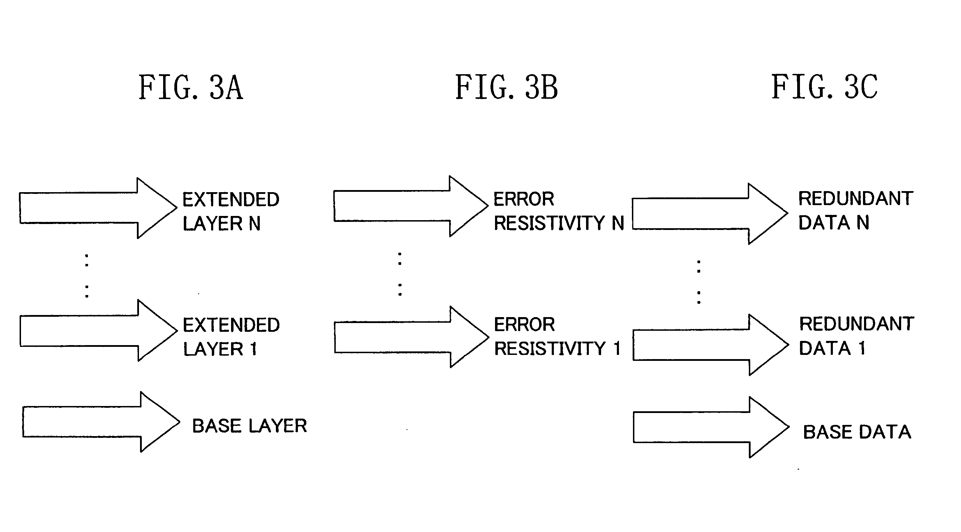

FIGS. **3A, 3B** and **3C** show encoded data formed in the video encoder **201** or the audio encoder **202**. The arrows in the figures individually represent data steams.

In an example shown in FIG. **3A**, encoded AV data is constituted from a base layer and N (N: an integer) extended layers. More specifically, the data is encoded by using the MPEG-2 standardized SNR (Signal to Noise Ratio) scalability. Conceptually, according to the SNR scalability, in addition to data encoded by a standard scheme (base layer), a high frequency component of a video lost in the encoding of the base layer, and the extended layers are thereby formed. Adding such extended layers improves the image quality. In wavelet, JPEG (Joint Photographic Coding Experts Group)-2000, and MPEG-4 encoding as well, the SNR scalability is realized according to a concept similar to the above. For the scheme of implementing the base layer and the extended layers, time scalability, space scalability, or the like may be used.

In the case shown in FIG. **3B,** an error resistivity process is applied by using the AV encoding function itself. For example, for data with an error resistivity **1**, a video header protection process is set valid. For data with an error resistivity **2**, the packet length is set as short as possible to reduce the influence of transport errors. Further, for data with error resistivity **3**, an intra-frame (or an intra-macroblock) interval is set short for ease recovery from errors. Thus, multiple streams of AV data improved in error resistivity are prepared according to predicted transport error rates, and AV data to be received is determined according to error rates detected by the reception terminal **104** (which will be described below).

In the case shown in FIG. **3C,** multiple streams of redundant data are prepared according to predicted transport error rates. For example, as described above, the XOR (exclusive OR) logic is used to generate redundant data between continuous two packets. For example, one item of redundant data is formed for three or four multiple streams of encoded data (by altering error correctability), and multiple streams of redundant data 1 to N are thereby generated. Generally, when the error correctability is set to low, an amount of redundant data can be reduced.

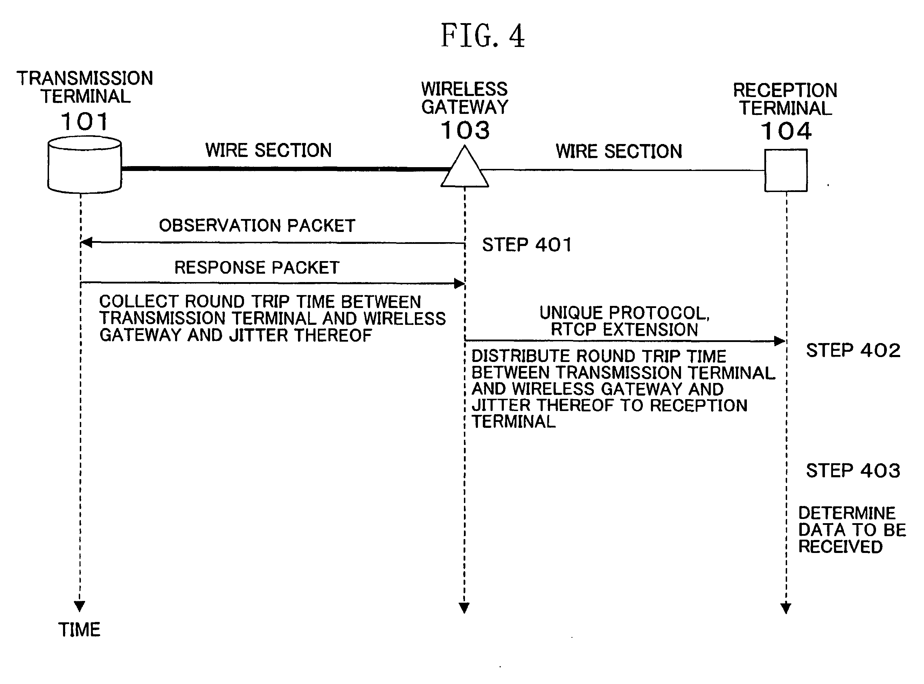

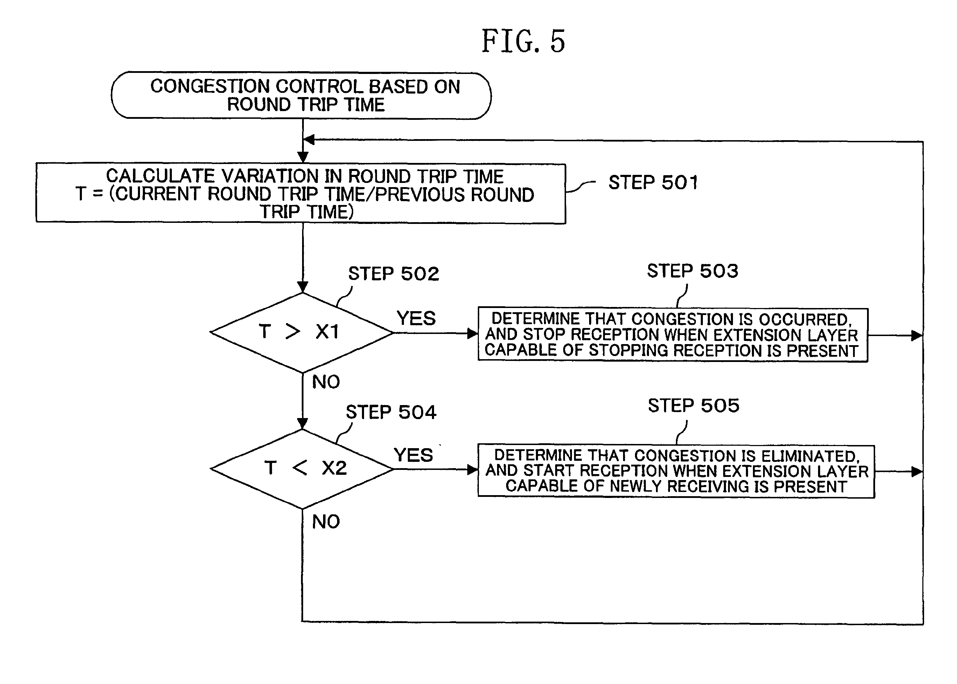

FIG. **4** shows a method of measuring an RTT and jitter thereof. Referring to FIG. **4**, the wireless gateway **103** transmits an observation packet to the transmission terminal **101** to measure an RTT and jitter thereof. In response to the observation packet, the transmission terminal **101** transmits a response packet to the wireless gateway **103**. The time from transmission of the observation packet to reception of the response packet is measured, and the RTT is measured thereby. In addition, timewise variation of the RTT is measured, and the jitter thereof is measured thereby. A measuring method in this case may be the ICMP (Internet Control Message Protocol) packet that is known as an Internet standard protocol or the RTP (Realtime Transport Protocol)/RTCP (RTP Control Protocol) known as a media transmission protocol (step **401**). Using the multicast function, the wireless gateway **103** distributes the RTT between the transmission terminal **101** and the wireless gateway **103** and the jitter thereof to the reception terminal **104.** The distribution protocol may be either an unique protocol or a protocol extended from a standard protocol such as RTCP (step **402**). On the basis of the received information of, for example, the RTT and the jitter thereof, the reception terminal **104** determines encoded data to be received (a base layer and extended layers) (step **403**). An algorithm for the determination will be described with referenced to FIG. **5**. In a congestion state, since the wireless gateway **103** has information regarding the congestion state, the wireless gateway **103** may give an instruction regarding data to be received to the reception terminal **104** (the instruction is given using, for example, any one of the base layer and the extended layer **1** to **N**).

FIG. **5** shows a method of performing congestion control on the basis of an RTT. In this case, it is assumed that, with hierarchically encoding being employed, a base layer is always received, and reception by extended layers is selectively performed in accordance with the congestion state. That is, the AV data shown in FIG. 3A is assumed to be transmitted. The reception terminal **104** calculates an RTT variation (T) from a value of a previous RTT and a value of a current RTT. A calculation equation is, for example, as follows (step **501**):

$$T = \text{current RTT/previous RTT}$$

For implementation of hysteresis operation, a threshold indicative of the presence of congestion is represented by X1, and a threshold indicative of elimination of congestion is represented by X2, in which the relation X2 < X1 is established. When T is greater than X1 (step **502**), the scheme determines that congestion has occurred. If an extended layer ready to be stopped for reception is present, the reception is stopped (step **503**). When T is smaller than X2 (step **504**), it is determined that congestion is eliminated. If an extended layer ready to be newly received is present, the reception is started (step **505**). In this case, control similar to the above may be implemented in the manner of detecting congestion by using a packet loss rate, jitter, or the like resulted from the congestion. Further, the control may be such that the hierarchically encoded AV data is not used, but data encoded at encoding rates of multiple types is appropriately selected according to the congestion state.

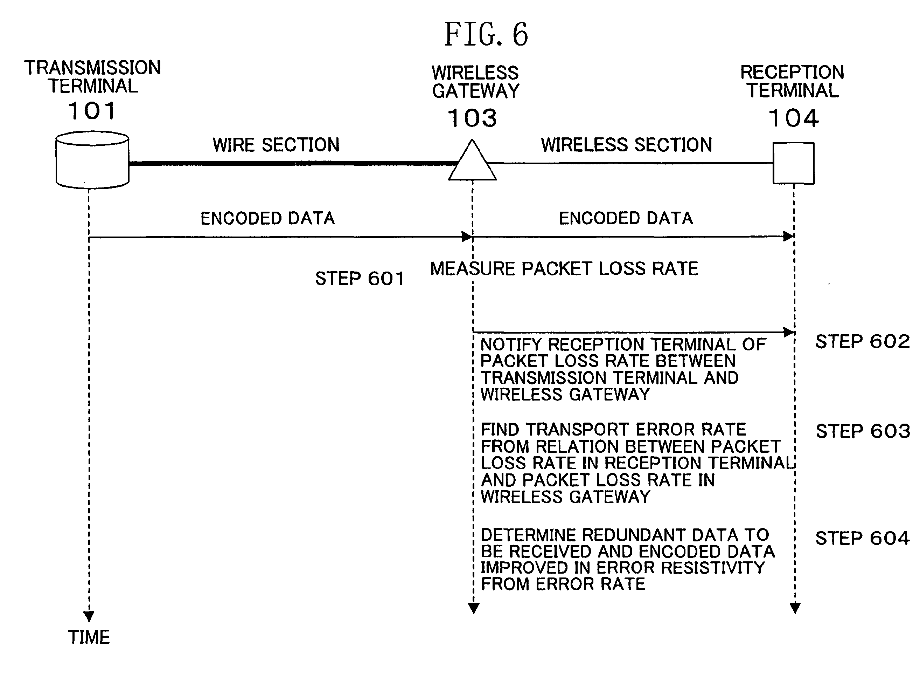

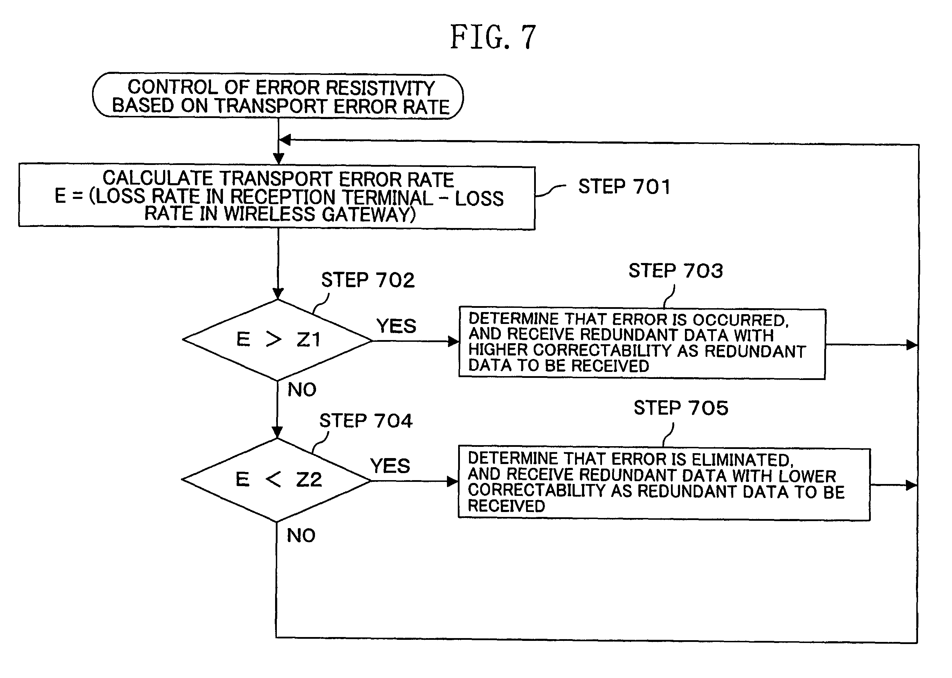

FIG. **6** shows a method of measuring a packet loss rate and transport error rate resulted from congestion. Referring to FIG. **6**, in the wireless gateway **103**, lost serial numbers of packets that transport encoded data transmitted from the transmission terminal **101** are detected, the number of lost packets per unit time is measured, and the packet loss rate is calculated from the result (step **601**). The packet loss rate is obtained with respect to the wire section; that is, it is a packet loss rate resulted from congestion. The wireless gateway **103** transports encoded data to the reception terminal **104**. Concurrently, the wireless gateway **103** notifies the reception terminal **104** of the obtained packet loss rate by multicast transmission (step **602).** The reception terminal **104** finds a transport error rate from the relation between a packet loss rate obtained in the reception terminal **104** through the observation and the packet loss rate obtained in the wireless gateway **103** (step **603**). The calculation method will be described with reference to FIG. 7. Next, redundant data to be received, encoded data improved in error resistivity and the like are determined in accordance with the transport error rate (step **604**).

FIG. **7** shows a method of controlling error resistivity on the basis of a transport error rate. AV data used in this case is assumed to have the configuration of the redundant data shown in FIG. 3C. Additionally, it is assumed that the base layer is always received, and any one of streams of the redundant data with correctabilities different from one another is selectively received at the reception terminal **104** according to the transport error rate.

A transport error rate (E) occurred in the wireless section can be calculated from the relation between a packet loss rate observed in the reception terminal **104** and a packet loss rate observed in the wireless gateway **103**. A calculation equation in this case is as follows (step **701**):

$$E = (\text{packet loss rate in the reception terminal 104}) - (\text{packet loss rate in the wireless gateway 103})$$

The packet loss rate may be calculated either by adding the redundant data or without adding the redundant data. For implementation of hysteresis operation, a threshold at which the presence of an error is determined is represented by $Z1$, and a threshold at which elimination of an error is determined is represented by $Z2$, in which the relation $Z2 < Z1$ is established. When $E > Z1$ (step **702**), it is determined that an error has occurred, and redundant data with a higher correctability is received as redundant data to be received (step **703**). When $E < Z2$ (step **704**), it is determined that the error has been eliminated, and redundant data with a lower correctability is received as redundant data to be received (step **705**). In this case, as shown in FIG. **3B,** AV data with error resistivity strength that are different from one another and that can be imparted to the encoded data itself may be selectively received according to the error rates.

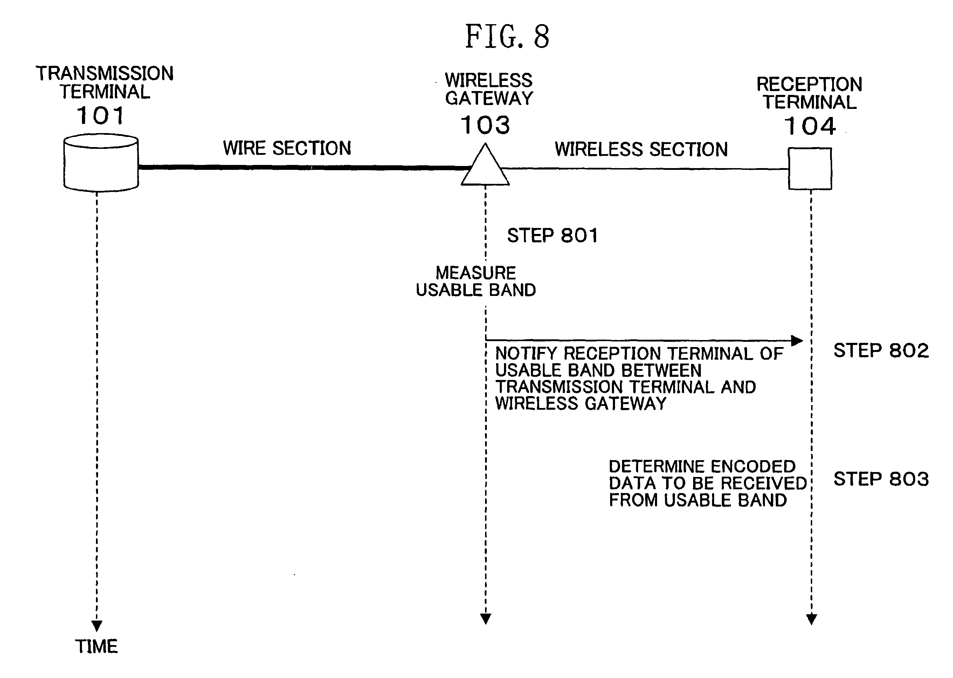

FIG. **8** shows a method of measuring a usable band in the wireless gateway **103** and performing congestion control. In this case, it is assumed that, with hierarchical encoding being employed, a base layer is always received, and reception of extended layers is selectively performed corresponding to the congestion state. That is, the AV data shown in FIG. **3A** is assumed to be transmitted. First, the wireless gateway **103** measures an effective band on the basis of an IP address, a port number, or the like to check usable bands (step **801**). Conventionally, as practical band measurement tools, there have been developed tools of general types, such as a UNIX-based pathchar and a pchar (A. B. Downey et al., "Using pathchar estimate Internet Link characteristics", ACM SIGCOMM '99). After usable bands have been measured by the wireless gateway **103,** a usable band between the transmission terminal **101** and the wireless gateway **103** is notified to the reception terminal **104** (step **802**). As a notification protocol, a unique protocol may be used. The reception terminal **104** selects receivable extended layers on the basis of the notified band (step **803**). By way of a selection method, layers in which the transmission rate becomes maximal within a range of the measured band are selected.

In the example described above, each reception terminal **104** individually determines the data to be received according to, for example, the congestion state and the transport error state. However, a scheme may be employed in which the data to be received (such as those designated through the base layer, extended layers **1** to **N**, and redundant data **1** to **N**) are mutually notified among reception terminals belonging to a same multicast group (belonging to a same wireless gateway). For example, a reception terminal receives minimal data on the basis of data to be received that has been notified by another reception terminal. More specifically, suppose that a reception terminal **A** and a reception terminal **B** exist, in which the reception terminal **A** determines the base layer, redundant data **1** and redundant data **2** to be received, and the reception terminal **B** determines the base layer and redundant data **1** to be received. In this case, after mutual notification, the reception terminals **A** and **B** each receive only the base layer and the redundant data **1**. With such inter-reception terminal cooperative operations being employed, the congestion is reduced.

In addition, in the example described above, while the intermediate node **103** measures the RTT and transport band in the wire section to notify the reception terminal **104** of the result, the transmission terminal **101** may be used to measure the RTT and transport band in the wire section and to notify the reception terminal **104** of the result. An example of the operation sequence of congestion control based on the RTT in this configuration is equivalent to a modified sequence of that shown in FIG. **4**. Specifically, the transmission terminal **101** measures the RTT and the jitter thereof in step **401** (that is, the observation packet is transmitted from the transmission terminal **101** to the wireless gateway **103**, and the response packet is transmitted from the wireless gateway **103** to the transmission terminal **101**); and in step **402** the RTT and the jitter thereof are distributed from the transmission terminal **101**, not from the wireless gateway **103**. In this case, the operation of the congestion control in the reception terminal **104** is equivalent to that of FIG. **5**. Further, the operation sequence of the congestion control based on the transport band is equivalent to a modified sequence of that shown in FIG. **8**. Specifically, in step **801** the transmission terminal **101** performs the band estimation, and in step **802** the transmission terminal **101** notifies the reception terminal **104** of the transport band. In the case of executing the present invention, the configuration described above is advantageous in that functions need to be added only to the transmission terminal and the reception terminal, and the special functions of measuring RTTs, transport bands and the like need not be mounted in the wireless gateway **103**. Consequently, objects to which functions need to be added can be reduced in number. The wireless gateway **103** needs to transmit the response packet to measure the RTT, the transport band and the like; however, the mounting of the special functions can be obviated by utilizing the ICMP echo ordinarily mounted as a standard unit.

In each of the examples shown in FIGS. **4, 6** and **8**, the wireless gateway **103** notifies the reception terminal **104** of the information indicative of the network congestion state including the RTT, packet loss rate and transport band. However, in the case where a plurality of wireless gateways are present, the reception terminal **104** is difficult to identify which one of the wireless gateways has notified the information. As such, when the reception terminal **104** requests for connection to a wireless gateway, the reception terminal **104** is first notified of a name of the wireless gateway (RTP ID such as an IP address or CNAME) from the wireless gateway. Further, when a wireless gateway notifies information regarding congestion, since the wireless gateway transmits it together with the name of its own, the reception terminal **104** is capable of determining which one of the wireless gateway has notified the information. A method of acquiring the name of the wireless gateway at the time of making the connection request may be as described hereunder. In the case where the connection is established at a data link level, the name of the wireless gateway may be acquired by using the name of the wireless gateway as connection information for participation in a multicast group at the time of connection establishment as in the event of connection establishment on an application basis.

Further, in the example described above, the wireless gateway **103** measures the RTT, packet loss rate and transport band in the wire section, and notifies the reception terminal **104** of the results; and the reception terminal **104** itself determines data to be received. However, an alternative method is contemplated in which the wireless gateway **103** determines the data to be received by the reception terminal **104**. More specifically, the configuration is arranged such that the reception data determination controller **209** shown in FIG. **2** is removed from the reception terminal **104**, and the intermediate node (wireless gateway) **103** is constituted to include the reception data determination controller **209**. In addition, this configuration is capable of executing the present invention. An example of the operation sequence of congestion control in this configuration is equivalent to a modified sequence of that shown in FIG. **4** in which step **402** is omitted, and the wireless gateway **103** is controlled to execute step **403**. Operation of the reception data determination controller **209** that controls congestion is the same as the operation described with reference to FIG. **5**. An example operation sequence of error resistivity control in this configuration is equivalent to a modified sequence of that shown in FIG. **6**. Specifically, step **602** is modified such that the packet loss rate is notified from the reception terminal **104** to the wireless gateway **103**, and steps **603** and **604** are modified to be executed by the wireless gateway **103**. In addition, operation of the reception data determination controller **209** when executing the error resistivity control is the same as that shown in FIG. **7**.

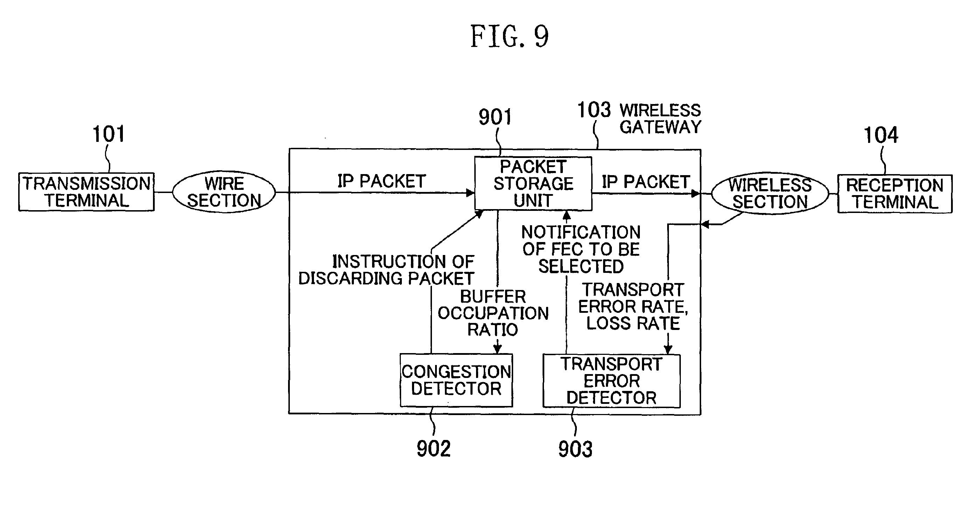

FIG. **9** is a configuration diagram of the intermediate node (wireless gateway) **103** that selectively transfers multicast-transported data. The wireless gateway **103** shown in FIG. **9** manages packet transport control according to the degree of congestion and packet transport control according to the occurrence frequency of transport errors in the wireless section. This wireless gateway **103** is configured to include a packet storage unit **901** that stores IP packets to be relayed; a congestion detector **902** that detects congestion; and a transport error detector **903** that detects, for example, transport error rates and packet loss rates in the wireless section. In this case, it is assumed that priority information is imparted to individual IP packets by the transmission terminal **101,** and multiple streams of redundant data (FEC data) for implementing mutually different error resistivity strength (indicative of, for example, how many continuous packets are to be restored) are transmitted from the transmission terminal **101**.

The packet storage unit **901** is constituted from one or more finite-length buffers and, if necessary, has an output routing function that selects one of two or more wireless networks. In addition, as a prerequisite, the buffer has selective packet discarding means, such as a FIFO (First-In First-Out) queue, RED (Random Early Drop), RIO (RED In-Out), and WRED (Weighted RED).

The congestion detector **902** monitors the storage amount of IP packets in the packet storage unit **901**. For example, if the current storage amount (buffer occupation amount) of IP packets is less than one-third a storable limit capacity in the packet storage unit **901,** it is determined that congestion is absent; If it is one-third or more and half or less, the state is determined to be a light congestion state; and if it is half or more, the state is determined to be a heavy congestion state. On the basis of the determination result, packet discarding in the packet storage unit **901** is instructed. More specifically, when congestion is determined to be absent, packet discarding is not performed; whereas when the state is determined to be the light congestion state, only a packet with a low priority level are discarded. When the state is determined to be the heavy congestion state, packets with the low priority level and an intermediate priority level are discarded.

The transport error detector **903** receives a notification regarding a transport error rate or packet loss rate measured by the reception terminal **104**, and determines redundant data to be transported according to the occurrence frequency of transport errors in the wireless section. For example, while amounts of redundant data are substantially the same, redundant data different in error correctability or redundant data different in error-correction protection object are used. More specifically, in the MPEG case, the transmission terminal **101** performs multicast-distribution of redundant data (weak FEC data **R1**) that imparts a low error correctability to both an intra-frame (I-frame) and an inter-frame (P-frame), and redundant data (strong FEC data **R2**) for imparting a high error correctability only to the intra-frame. When the transport error in the wireless section is low (for example, an error rate of 1% or lower), the transport error detector **903** notifies the packet storage unit **901** so that, of the two streams of FEC data **R1** and **R2,** the strong FEC data **R2** is discarded and only the weak FEC data **R1** is passed. On the other hand, when the transport error in the wireless section is high (for example, an error rate of 1% or higher), the transport error detector **903** notifies the packet storage unit **901** so that, of the two streams of FEC data **R1** and **R2,** the weak FEC data **R1** is discarded and only the strong FEC data **R2** is passed. Similar scheme may be applied to hierarchically encoded AV data.

In the transmission terminal **101** described with reference to FIG. **2,** the video encoder **201** and the audio encoder **202** impart the priority information. The intra-frame can be set to the high priority level, the inter-frame can be set to the intermediate priority level, and audio data can be set to the low priority level, respectively. In addition, of the audio data, data in a sound time may be set to the high priority level, and data in a soundless time may be set to the low priority level. The prioritization scheme may also be implemented among other different media, such as characters and music. In addition, the prioritization scheme may be applied to AV data in such a manner that the high priority level is set to the base layer, and the low priority level is set to each of the extended layers. Further, the priority information may be imparted to the AV data for transmission. For example, data encoded at 96 kbps is set to the high priority level, and data encoded at 128 kbps is set to the low priority level. In this case, while relaying 128 kbps data, if the wireless gateway **103** has detected a congestion state, the 128 kbps data is discarded, and the 96 kbps data is transferred to the reception terminal **104**. When the congestion has been eliminated, the 96 kbps data is discarded, and the 128 kbps data is transferred to the reception terminal **104**. For the information regarding the priority level, TOS (Type Of Service) fields for description of the priority information of IP packets may be used.

Since the transmission terminal **101** distributes multiple streams of redundant data having different error resistivity strengths, the wireless gateway **103** should distinguish the data to perform operations such as transfer and discarding. For distinguishing the data, TOS fields for description of the IP-packet priority information may be used. For example, "1" for the intra-frame, "2" for the inter-frame, "3" for the strong FEC data, and "4" for the weak FEC data are labeled into TOS fields in units of transmission data on the transmission side. In the case of simultaneously transporting AV data encoded at different encoding rates, when redundant data corresponding to the encoding rates are prepared and data at an objective encoding rate is modified in response to detection of congestion, the redundant data to be discarded or transferred needs to be modified as well to meet the objective encoding rate.

Further, depending on the transport error, both AV data and redundant data may be selectively discarded or transferred. For example, when the transport error rate is low, both the intra-frame and inter-frame are transferred, and the redundant data is discarded. When the transport error rate is high, the intra-frame and redundant data are transferred, and the inter-frame is discarded. In this case, the congestion detector 902 shown in FIG. 9 is not necessary.

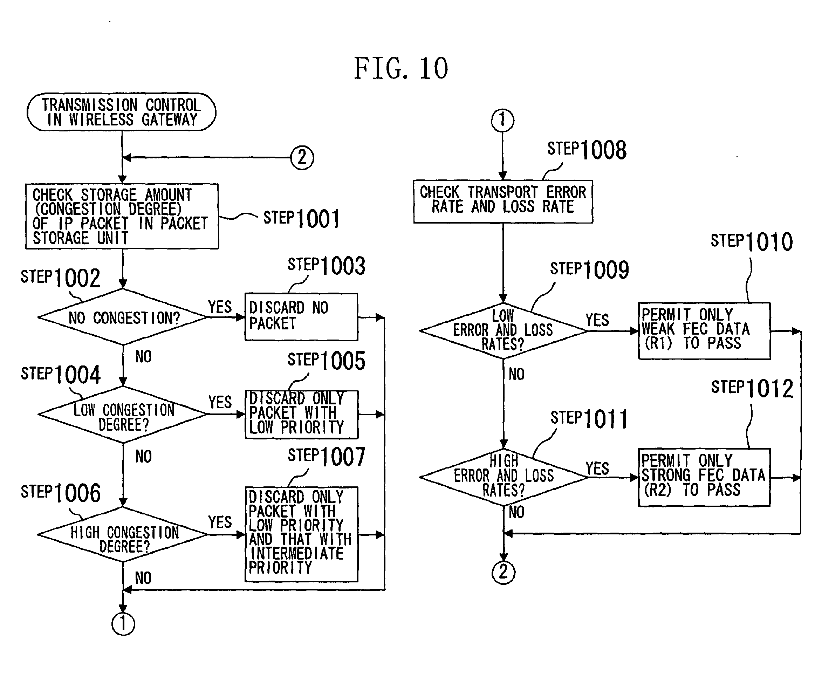

FIG. **10** shows a method of performing transport control in the wireless gateway **103.** Referring to FIG. **10,** firstly, the packet storage unit **901** checks the storage amount of IP packets (degree of congestion) (step **1001).** When congestion is absent, packet discarding is not performed (steps **1002** and **1003**). When the degree of congestion is low, only a packet with the low priority level is discarded (steps **1004** and **1005**). When the degree of congestion is high, a packet with either the low priority level or the intermediate priority level is discarded (step **1006** and **1007**). In addition, the transport error rate and the packet loss rate are checked (step **1008).** When the error and packet loss rates are low, the strong FEC data **R2** is discarded, and only the weak FEC data **R1** is passed (steps **1009** and **1010).** When the error and packet loss rates are high, the weak FEC data **R1** is discarded, and only the strong FEC data **R2** is passed (steps **1011** and **1012).** When the degree of congestion has been varied upon modification of the error resistivity strength at step **1010** or **1012,** modification of relay data can occur at step **1003, 1005** or **1007** after the process has returned to step **1001.**

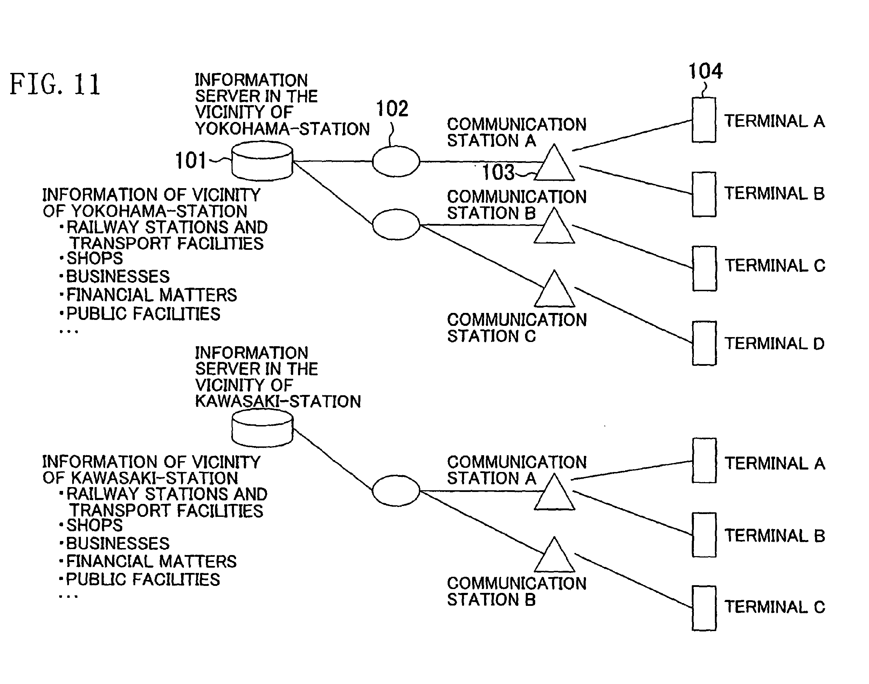

FIG. **11** is a schematic diagram of a multicast system adapting the present invention. Since the system performs multicast transmission, it is effective when distributing same contents to a large number of users. FIG. **11** shows an example application in which regional information is distributed to a plurality of cellular phone terminals. For example, a server (transmission terminal) **101** containing information regarding the vicinity of Yokohama-station distributes the information to cellular phone terminals (reception terminals **104**) **A** to **D** in the vicinity of Yokohama-station via the router **102** and communication stations (wireless gateways **103**) **A** to **C** in the vicinity of Yokohama-station. As distribution information, for example, crowdedness information of community facilities is transported in the form of live images; and advertisements of stores, movies, and the like are distributed. As a matter of course, information on a different region is distributed from a different server. As shown in FIG. **11,** a server containing information regarding the vicinity of Kawasaki-station distributes regional information to the cellular phone terminals **A** to **C** in the vicinity of the Kawasaki-station via a router and communication stations **A** and **B** in the vicinity of Kawasaki-station. Using the present invention as described above enables high-quality multicast transport to be implemented. In applications other than the above, the present invention is effective when distributing the same data stream to a large number of users.

In the individual embodiments described above, while the transport paths between the transmission terminal and the reception terminals include the wire section and the wireless section, the present invention may also be adapted to the case where the overall transport paths are constituted of only a wireless network.

**INDUSTRIAL APPLICABILITY**

According to the present invention, it is possible to realize audio transport without disconnection and video transport without distortion even on a network having a wireless section.

**Claims**

1.   A data transmission/reception method of transmitting/receiving a data packet between a transmission terminal and a reception terminal in a transport path having a wire section and a wireless section via a gateway which is present in a boundary between the both sections, the method comprising the steps of:

   acquiring information regarding a state of data reception and/or data transmission in an intermediate node including the gateway provided on the transport path; and
   allowing the reception terminal or the intermediate node to determine data to be received by the reception terminal on the basis of the information regarding the state of data reception and/or data transmission in the intermediate node.

2.   The data transmission/reception method of Claim 1, further comprising the step of:

   determining the data to be received on the basis of at least one of a round trip time between the transmission terminal and the intermediate node, jitter of the round trip time, a packet loss rate at the intermediate node, and a link band of the intermediate node.

3.   The data transmission/reception method of Claim 1, further comprising the step of:

   determining at least one of hierarchically encoded data, data subjected to an error resistivity process and redundant data as the data to be received on the basis of information of packet loss obtained in the intermediate node and information of packet loss obtained in the reception terminal.

4.   A data transmission/reception method of transmitting/receiving a data packet between a transmission terminal and a reception terminal via an intermediate node in a transport path having a wireless section, the method comprising the steps of:

   acquiring information regarding a transport error in the wireless section; and
   allowing the intermediate node to determine an error resistivity strength of data to be transferred on the basis of the information regarding the transport error in the wireless section.

5.   The data transmission/reception method of Claim 4, further comprising the steps of:

   acquiring information regarding a congestion state of the transport path; and
   allowing the intermediate node to determine data to be received on the basis of the information regarding the congestion state of the transport path in accordance with given priority.

# FIG. 1

TRANSMISSION TERMINAL — 101

102

ROUTER

WIRELESS GATEWAY

103

RECEPTION TERMINAL

104

WIRE SECTION

WIRELESS SECTION

FIG. 2

EP 1 422 892 A1

FIG. 3A      FIG. 3B      FIG. 3C

EXTENDED LAYER N

⋮

EXTENDED LAYER 1

BASE LAYER

ERROR RESISTIVITY N

⋮

ERROR RESISTIVITY 1

REDUNDANT DATA N

⋮

REDUNDANT DATA 1

BASE DATA

# FIG. 4

TRANSMISSION TERMINAL
**101**

WIRELESS GATEWAY
**103**

RECEPTION TERMINAL
**104**

WIRE SECTION

WIRE SECTION

OBSERVATION PACKET — STEP 401

RESPONSE PACKET

COLLECT ROUND TRIP TIME BETWEEN TRANSMISSION TERMINAL AND WIRELESS GATEWAY AND JITTER THEREOF

UNIQUE PROTOCOL, RTCP EXTENSION — STEP 402

DISTRIBUTE ROUND TRIP TIME BETWEEN TRANSMISSION TERMINAL AND WIRELESS GATEWAY AND JITTER THEREOF TO RECEPTION TERMINAL

STEP 403

DETERMINE DATA TO BE RECEIVED

TIME

EP 1 422 892 A1

# FIG. 5

```
        ┌─────────────────────────────────────┐
        │   CONGESTION CONTROL BASED ON        │
        │        ROUND TRIP TIME               │
        └─────────────────────────────────────┘
                        │
                        ▼
┌────────────────────────────────────────────────┐
│   CALCULATE VARIATION IN ROUND TRIP TIME        │── STEP 501
│ T = (CURRENT ROUND TRIP TIME/PREVIOUS ROUND     │
│              TRIP TIME)                          │
└────────────────────────────────────────────────┘
                        │
                        ▼              STEP 502                    STEP 503
                       ╱╲
                      ╱   ╲      YES    ┌────────────────────────────────────────────┐
                     ╱ T > X1 ╲─────────│ DETERMINE THAT CONGESTION IS OCCURRED,     │
                     ╲        ╱         │ AND STOP RECEPTION WHEN EXTENSION LAYER    │
                      ╲      ╱          │ CAPABLE OF STOPPING RECEPTION IS PRESENT   │
                       ╲    ╱           └────────────────────────────────────────────┘
                        │ NO
                        ▼              STEP 504                    STEP 505
                       ╱╲
                      ╱   ╲      YES    ┌────────────────────────────────────────────┐
                     ╱ T < X2 ╲─────────│ DETERMINE THAT CONGESTION IS ELIMINATED,   │
                     ╲        ╱         │ AND START RECEPTION WHEN EXTENSION LAYER   │
                      ╲      ╱          │ CAPABLE OF NEWLY RECEIVING IS PRESENT      │
                       ╲    ╱           └────────────────────────────────────────────┘
                        │ NO
                        │
```

EP 1 422 892 A1

# FIG. 6

TRANSMISSION
TERMINAL
**101**

WIRELESS
GATEWAY
**103**

RECEPTION
TERMINAL
**104**

WIRE SECTION

WIRELESS SECTION

ENCODED DATA

ENCODED DATA

STEP 601 — MEASURE PACKET LOSS RATE

NOTIFY RECEPTION TERMINAL OF
PACKET LOSS RATE BETWEEN
TRANSMISSION TERMINAL AND
WIRELESS GATEWAY — STEP 602

FIND TRANSPORT ERROR RATE
FROM RELATION BETWEEN PACKET
LOSS RATE IN RECEPTION TERMINAL
AND PACKET LOSS RATE IN
WIRELESS GATEWAY — STEP 603

DETERMINE REDUNDANT DATA TO
BE RECEIVED AND ENCODED DATA
IMPROVED IN ERROR RESISTIVITY
FROM ERROR RATE — STEP 604

TIME

EP 1 422 892 A1

# FIG. 7

$$\text{CONTROL OF ERROR RESISTIVITY} \atop \text{BASED ON TRANSPORT ERROR RATE}$$

CALCULATE TRANSPORT ERROR RATE
E = (LOSS RATE IN RECEPTION TERMINAL − LOSS RATE IN WIRELESS GATEWAY) — STEP 701

STEP 702

$E > Z1$

YES → DETERMINE THAT ERROR IS OCCURRED, AND RECEIVE REDUNDANT DATA WITH HIGHER CORRECTABILITY AS REDUNDANT DATA TO BE RECEIVED — STEP 703

NO

STEP 704

$E < Z2$

YES → DETERMINE THAT ERROR IS ELIMINATED, AND RECEIVE REDUNDANT DATA WITH LOWER CORRECTABILITY AS REDUNDANT DATA TO BE RECEIVED — STEP 705

NO

EP 1 422 892 A1

# FIG. 8

TRANSMISSION
TERMINAL
101

WIRELESS
GATEWAY
103

RECEPTION
TERMINAL
104

WIRE SECTION

WIRELESS SECTION

STEP 801

MEASURE
USABLE BAND

NOTIFY RECEPTION TERMINAL OF
USABLE BAND BETWEEN
TRANSMISSION TERMINAL AND
WIRELESS GATEWAY

STEP 802

DETERMINE ENCODED
DATA TO BE RECEIVED
FROM USABLE BAND

STEP 803

TIME

EP 1 422 892 A1

# FIG. 9

TRANSMISSION TERMINAL — 101

WIRE SECTION

IP PACKET

901 — PACKET STORAGE UNIT

103 WIRELESS GATEWAY

IP PACKET

WIRELESS SECTION

RECEPTION TERMINAL — 104

INSTRUCTION OF DISCARDING PACKET

NOTIFICATION OF FEC TO BE SELECTED

BUFFER OCCUPATION RATIO

TRANSPORT ERROR RATE, LOSS RATE

CONGESTION DETECTOR — 902

TRANSPORT ERROR DETECTOR — 903

EP 1 422 892 A1

# FIG. 10

TRANSMISSION CONTROL IN WIRELESS GATEWAY

② 

CHECK STORAGE AMOUNT (CONGESTION DEGREE) OF IP PACKET IN PACKET STORAGE UNIT — STEP1001

STEP1002 — NO CONGESTION? — YES → DISCARD NO PACKET STEP1003

NO

STEP1004 — LOW CONGESTION DEGREE? — YES → DISCARD ONLY PACKET WITH LOW PRIORITY STEP1005

NO

STEP1006 — HIGH CONGESTION DEGREE? — YES → DISCARD ONLY PACKET WITH LOW PRIORITY AND THAT WITH INTERMEDIATE PRIORITY STEP1007

NO

①

① 

CHECK TRANSPORT ERROR RATE AND LOSS RATE STEP1008

STEP1009 — LOW ERROR AND LOSS RATES? — YES → PERMIT ONLY WEAK FEC DATA (R1) TO PASS STEP1010

NO

STEP1011 — HIGH ERROR AND LOSS RATES? — YES → PERMIT ONLY STRONG FEC DATA (R2) TO PASS STEP1012

NO

②

EP 1 422 892 A1

19

## FIG. 11

INFORMATION SERVER IN THE VICINITY OF YOKOHAMA-STATION

102

104

COMMUNICATION STATION A

TERMINAL A

101

103

INFORMATION OF VICINITY OF YOKOHAMA-STATION
- RAILWAY STATIONS AND TRANSPORT FACILITIES
- SHOPS
- BUSINESSES
- FINANCIAL MATTERS
- PUBLIC FACILITIES
...

TERMINAL B

COMMUNICATION STATION B

TERMINAL C

COMMUNICATION STATION C

TERMINAL D

INFORMATION SERVER IN THE VICINITY OF KAWASAKI-STATION

INFORMATION OF VICINITY OF KAWASAKI-STATION
- RAILWAY STATIONS AND TRANSPORT FACILITIES
- SHOPS
- BUSINESSES
- FINANCIAL MATTERS
- PUBLIC FACILITIES
...

COMMUNICATION STATION A

TERMINAL A

TERMINAL B

COMMUNICATION STATION B

TERMINAL C

## INTERNATIONAL SEARCH REPORT

| | International application No. |
|---|---|
| | PCT/JP02/08392 |

**A. CLASSIFICATION OF SUBJECT MATTER**
Int.Cl⁷ H04L12/66, H04L12/56, H04L29/08, H04L1/00

According to International Patent Classification (IPC) or to both national classification and IPC

**B. FIELDS SEARCHED**

Minimum documentation searched (classification system followed by classification symbols)
Int.Cl⁷ H04L12/66, H04L12/56, H04L29/08, H04L1/00

Documentation searched other than minimum documentation to the extent that such documents are included in the fields searched
Jitsuyo Shinan Koho          1922-1996    Toroku Jitsuyo Shinan Koho    1994-2002
Kokai Jitsuyo Shinan Koho    1971-2002    Jitsuyo Shinan Toroku Koho    1996-2002

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2000-244560 A (Kabushiki Kisha ATR Kankyo Tekio Tsushin Kenkyusho), | 1,2,4,5 |
| Y | 08 September, 2000 (08.09.00), Par. Nos. [0017] to [0027], [0037], [0044] to [0046]; Fig. 1 (Family: none) | 3 |
| Y | JP 2001-160824 A (Mitsubishi Electric Corp.), 12 June, 2001 (12.06.01), | 3 |
| A | Par. Nos. [0006] to [0009], [0017] to [0019] (Family: none) | 1,2,4,5 |
| A | JP 2001-45098 A (Canon Inc.), 16 February, 2001 (16.02.01), Par. Nos. [0079] to [0082] (Family: none) | 1-5 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 07 October, 2002 (07.10.02) | 22 October, 2002 (22.10.02) |

| Name and mailing address of the ISA/ | Authorized officer |
|---|---|
| Japanese Patent Office | |
| Facsimile No. | Telephone No. |

Form PCT/ISA/210 (second sheet) (July 1998)

**INTERNATIONAL SEARCH REPORT**

International application No.

PCT/JP02/08392

C (Continuation).   DOCUMENTS CONSIDERED TO BE RELEVANT

| Category* | Citation of document, with indication, where appropriate, of the relevant passages | Relevant to claim No. |
|---|---|---|
| A | EP 1061699 A1  (Fujitsu Ltd.),<br>20 December, 2000 (20.12.00),<br>Par. Nos. [0024] to [0025], [0041] to [0047]<br>& JP 11-243419 A | 1-5 |
| P,A | WO 02/17574 A1  (Matsushita Electric Industrial Co., Ltd.),<br>28 February, 2002 (28.02.02),<br>Page 15, line 23 to page 20, line 18;<br>Page 22, lines 1 to 23<br>& AU 200178717 A | 1-5 |

Form PCT/ISA/210 (continuation of second sheet) (July 1998)